# EUROPÄISCHE PATENTSCHRIFT

(11) **EP 1 013 328 B1**
(45) Veröffentlichungstag und Bekanntmachung des Hinweises auf die Patenterteilung: **28.05.2003**
(21) Anmeldenummer: 99124433.6
(22) Anmeldetag: 08.12.1999
(51) Int. Cl.: B01D 46/24, F01N 3/022

(54) **Filtereinrichtung**
Filtration device
Dispositif de filtration

(30) Priorität: 23.12.1998 DE 29822871 U
(43) Veröffentlichungstag der Anmeldung: 28.06.2000
(73) Patentinhaber: Thomas Josef Heimbach Gesellschaft mit beschränkter Haftung & Co., D-52353 Düren (DE)
(72) Erfinder: Benthaus, Oliver, 52353 Düren (DE); Best, Walter, Dr., 52351 Düren (DE); Schäfer, Wolfgang, 52349 Düren (DE); Schuhmacher, Uwe, Dr., 52224 Stolberg (DE)
(74) Vertreter: Paul, Dieter-Alfred, Dipl.-Ing.

(56) Entgegenhaltungen:
- EP-A- 0 304 762
- WO-A-93/13303
- US-A- 5 256 175
- US-A- 5 449 541

## Beschreibung

Die Erfindung betrifft eine Filtereinrichtung mit einem Filtergehäuse, in dem nebeneinander eine Vielzahl von eigenstabilen Filterelementen aus keramischem Material, insbesondere aus SiC, angeordnet sind, wobei die Filterelemente poröse, filterwirksame Längswandungen für die Durchströmung des zu filternden Mediums aufweisen, die Filterelemente rechteckigen Außenquerschnitt haben und eine Mehrzahl von Filterelementen zu einer im Querschnitt rechteckigen Filterelementgruppe zusammengefaßt sind.

Für die Heißgasfiltration, beispielsweise die Filtration von Dieselmotorabgasen oder von Abgasen aus großen Anlagen wie Müllverbrennungsanlagen etc., werden zunehmend rohrartige Filterelemente aus keramischem Material verwendet, die poröse, filterwirksame Außenwandungen für die Durchströmung des zu filternden Mediums aufweisen. Sofern ein einziges Filterelement nicht ausreicht, werden nebeneinander eine Mehrzahl oder Vielzahl von solchen Filterelementen angeordnet, welche dann gemeinsam angeströmt werden. Soweit diese Filterelemente als Filterkerzen ausgebildet sind und deshalb eine geringe oder gar keine Eigenstabilität haben, sind sie auf Stützrohren aufgezogen, die mit Durchbrechungen in Form von Lochmustern versehen sind (vgl. DE-A-38 23 205; DE-A-38 36 697; DE-C-40 26 375). Haben die Filterelemente Eigenstabilität, weil sie beispielsweise als Formkörper aus gesintertem SiC hergestellt worden sind, werden sie innerhalb des Filtergehäuses im Abstand zueinander angeordnet und endseitig eingefaßt und gehaltert (EP-A-0 446 422; EP-A-0 522 245; EP-A-0 454 346; EP-A-0 336 883, Fig. 7).

Bei den vorbeschriebenen Filtereinrichtungen ist von Nachteil, daß der spezifische Raumaufwand sehr hoch ist. Außerdem gestaltet sich der Austausch von Filterelementen schwierig. Die Filterelemente sind hierbei wie auch auf dem Transport von und zu der Filtereinrichtung nicht geschützt, wobei zu berücksichtigen ist, daß sie aus sehr sprödem Keramikmaterial bestehen. Die Befestigung der Filterelemente ist teilweise auch so, daß die Gefahr besteht, daß Dimensionsänderungen des Filtergehäuses aufgrund von Wärmeeinwirkung zu Verspannungen der Filterelemente und im Extremfall zu deren Zerstörung führen.

Daneben sind keramische Filterelemente ebenfalls runden Außenquerschnitts bekannt, die im Inneren durch poröse, filterwirksame Längswandungen schachbrettartig oder bienenwabenartig in Einström- und Ausströmkanäle aufgeteilt sind, wobei sich jeweils Einström- und Ausströmkanäle abwechseln. Die Einströmkanäle sind einströmseitig offen und abströmseitig geschlossen ausgebildet, während die Ausströmkanäle einströmseitig geschlossen und abströmseitig offen sind (EP-A-0 336 883, Figuren 5 und 6; US-A-4 897 096). Bei solchen Filterelementen ist der spezifische Raumaufwand wesentlich geringer, und sie haben auch eine relativ hohe Eigenstabilität. Eine Mehrfachanordnung solcher Filterelemente ist den genannten Dokumenten nicht zu entnehmen. Wenn sie jedoch entsprechend den rohrförmigen Filterelementen angeordnet werden, bleiben die Schwierigkeiten beim Ein- und Ausbau. Auch die Transportsicherheit ist wegen der Sprödigkeit des Materials unbefriedigend.

Bei Filtereinrichtungen mit Filterelementen, welche vollständig aus porösem keramischem Material bestehen und deshalb rein axial durchströmt werden, ist es bekannt, mehrere solcher Filterelemente innerhalb eines einzigen, im Querschnitt runden (WO 93/13303) oder ovalen Gehäuses (US-A-4 436 538) anzuordnen. Die Filterelemente haben Viertelsegment- oder Halbsegment-Querschnitt und sind untereinander und nach außen hin über Isolierschichten abgedichtet, die aus einem bei Einwirkung von Hitze expandierenden Material bestehen (WO 93/13303). Daneben ist es auch bekannt, Filterelemente mit rechteckigem Außenquerschnitt auszubilden und dann eine Mehrzahl von Filterelementen zu einer im Querschnitt rechteckigen Filterelementgruppe zusammenzufassen (US-A-5,449,541).

Eine Mehrfachanordnung solcher Zusammenfassungen von Filterelementen ist nicht vorgesehen. Dies gilt auch für die in der US-A-4 363 644 dargestellte Version, bei der innerhalb eines im Querschnitt kreisrunden, keramischen Tragkörpers, dessen Innenraum teilweise durch Zwischenwände aufgeteilt ist, ein poröses Material erzeugt und mit dem Tragkörper versintert wird.

Der Erfindung liegt die Aufgabe zugrunde, eine Filtereinrichtung mit einer Vielzahl von Filterelementen, bei denen filterwirksame Längswandungen durchströmt werden, so auszubilden, daß sie leicht eingebaut und ausgetauscht werden können und daß sie hierbei sowie beim Transport vor Beschädigungen geschützt sind. Eine weitere Aufgabe besteht darin, die Filterelemente so einzubauen, daß sie von Dehnungen oder Verwerfungen des Filtergehäuses möglichst weitgehend befreit sind.

Diese Aufgabe wird erfindungsgemäß dadurch gelöst, daß jede Filterelementgruppe innerhalb eines Kassettengehäuses unter Bildung jeweils einer Filterkassette angeordnet ist und die Filterkassetten im Filtergehäuse austauschbar gehaltert sind.

Grundgedanke der Erfindung ist es also, aus der Vielzahl der Filterelemente jeweils eine Mehrzahl von Filterelementen zu mehreren Filterelementgruppen zusammenzufassen und sie innerhalb einer Filterkassette anzuordnen, die als Ganzes mit den Filterelementen im Filtergehäuse montiert und demontiert werden kann. Hierdurch läßt sich eine dichte Anordnung der Filterelemente erzielen. Der Einund Ausbau kann auf einfache Weise und schnell erfolgen. Durch das Kassettengehäuse sind die Filterelemente gegen Beschädigung bei der Montage und Demontage sowie beim Transport geschützt. Verwerfungen und Dehnungen des Filtergehäuses werden von dem Kassettengehäuse aufgenommen oder bei entsprechender Halterung sogar erst gar nicht auf dieses übertragen, so daß die Filterelemente selbst von Spannungen freigehalten werden. Durch Gruppierung einer Vielzahl solcher Filterkassetten kann eine Filtereinrichtung nahezu beliebiger Größe aufgebaut werden. Als Material für das Kassettengehäuse kommt insbesondere Edelstahl in Frage.

Eine kompakte Anordnung der Filterkassetten erhält man insbesondere dann, wenn jeweils an wenigstens zwei Seiten einer Filterkassette benachbarte Filterkassetten vorgesehen sind, so daß sich insgesamt ein rechteckiger Querschnitt ergibt.

Bevorzugt sind Filterelemente, bei denen in an sich bekannter Weise nebeneinander und abwechselnd Einström- und Ausströmkanäle vorhanden sind, die durch die porösen, filterwirksamen Längswandungen getrennt sind, wobei die Einströmkanäle einströmseitig offen und abströmseitig geschlossen und die Ausströmkanäle einströmseitig geschlossen und abströmseitig offen sind. Die Ein- und Ausströmkanäle sind zweckmäßigerweise schachbrettartig angeordnet, wodurch die spezifische Raumausnutzung in bezug auf die filterwirksamen Flächen besonders günstig ist. Dabei sollten die Ein- und Ausströmkanäle in Anpassung an den Außenquerschnitt der Filterelemente rechteckigen, vorzugsweise quadratischen Querschnitt haben. Die Außenwandungen der Filterelemente können zweckmäßigerweise gasdicht, mindestens jedoch partikeldicht, ausgebildet werden.

Als besonders günstige Kombination hat sich erwiesen, eine Filterelementgruppe aus jeweils vier Filterelementen zusammenzusetzen, wobei die Filterelemente einer Filterelementgruppe zweckmäßigerweise so angeordnet sind, daß jeweils an zwei Seiten eines Filterelements benachbarte Filterelemente vorhanden sind. Dabei hat sich herausgestellt, daß eine Anordnung mit vier Filterelementen eine Reihe von Vorteilen hat. So wird durch Formschluß ein Durchschieben der Filterelemente vermieden. Außerdem können die Spaltmaße für Isolierschichten genauer eingehalten werden. Auch Größe, Gewicht und Kosten liegen in einem vernünftigen Bereich. Durch Reihenschaltung kann eine einfache Verkettung zum Zwecke der elektrischen Aufheizung erzielt werden.

In weiterer Ausgestaltung der Erfindung ist vorgesehen, daß die Filterkassetten in wenigstens zwei beabstandeten Querwandungen gehaltert sind, jedoch nur an einer Querwandung axial fixiert sind. Diese Art der Halterung vermeidet eine Übertragung von Dehnungen oder Verwerfungen des Filtergehäuses auf die Filterkassetten, so daß diese auch bei starken Temperaturänderungen der zu filternden Gase spannungsfrei bleiben. In Ausbildung dieses Gedankens besteht die Möglichkeit, daß die Filterkassetten anströmseitig einen Flansch aufweisen, der auf der Anströmseite der einen Querwandung anliegt, wobei es sich anbietet, die axiale Fixierung der Filterkassetten über die Flansche vorzunehmen. Für die abströmseitige Querwandung reichen dann passende Aufnahmeausnehmungen für die Filterkassetten aus. Eine Axialfixierung ist dort nicht erforderlich und auch nicht zweckmäßig.

Es versteht sich, daß die Filterelemente am besten geschützt sind, wenn die Kassettengehäuse die Filterelementgruppen über deren gesamte Länge umgeben.

Vorteilhaft ist es, zwischen den Filterelementen untereinander und zwischen den Filterelementen und dem Kassettengehäuse Isolierschichten beispielsweise aus einem unter Einwirkung von Hitze expandierenden Material vorzusehen, so daß die Filterelemente entsprechend entkoppelt sind und damit kleinere Änderungen der Formgebung der Filterelemente und des Kassettengehäuses von den Isolierschichten aufgenommen werden können. Die Isolierschichten sorgen zudem für eine Fixierung der Filterelemente in axialer Richtung, einen Ausgleich unterschiedlicher Wärmedehnungen von Kassettengehäuse und Filterelementen, Abdichtung, Dämpfung sowie elektrische Isolation.

Nach der Erfindung ist ferner vorgesehen, daß das Filtergehäuse isolierte Durchführungen elektrische Zuleitungen aufweist, wobei die isolierten Durchführungen eine gasdichte und thermische Isolation bilden.

In der Zeichnung ist die Erfindung anhand eines Ausführungsbeispiels näher veranschaulicht. Es zeigen:
- Fig. 1: einen Längsschnitt durch eine erfindungsgemäße Filtereinrichtung und
- Fig. 2: eine Ansicht der Anströmseite der Filterkassetten der Filtereinrichtung gemäß Fig. 1.

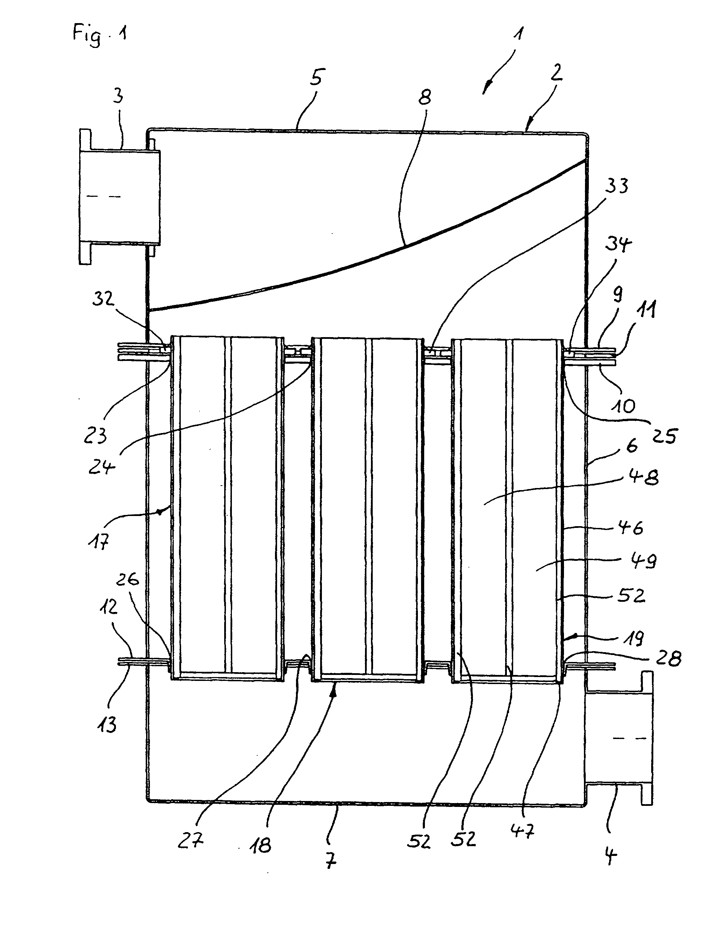

Die in Fig. 1 dargestellte Filtereinrichtung 1 weist ein kubisches Filterhäuse 2 aus Stahl auf, das im oberen Bereich einen Einströmstutzen 3 und im unteren Bereich auf der anderen Seite des Filtergehäuses 2 einen Ausströmstutzen 4 aufweist. Das Filtergehäuse 2 ist aus insgesamt drei Teilen zusammengesetzt, nämlich einer Einströmhaube 5, einem Mittelteil 6 und einer Ausströmhaube 7.

Die Einströmhaube 5 wird durch ein gebogenes Lochblech 8 aufgeteilt. Das über den Einströmstutzen 3 einströmende und zu reinigende Gas durchströmt das Lochblech 8, wobei die Gasströmung über den Querschnitt des Filtergehäuses 2 vergleichmäßigt wird. Der untenseitige Rand der Einströmhaube 5 ist mit einem über den gesamten Umfang gehenden und nach außen herausragenden Flansch 9 versehen.

Das Mittelteil 6 hat quadratischen Querschnitt und wird zur Einströmhaube 5 hin durch eine Querwandung 10 abgeschlossen. Die Querwandung 10 ragt in dem gleichen Umfang wie der Flansch 9 nach außen und ist mit diesem verschraubt, wobei ein zwischengelegter Dichtstreifen 11 die Abdichtung übernimmt. Auch die Abströmseite des Mittelteils 6 ist mit einer Querwandung 12 versehen, die ebenfalls einen flanschartig nach außen ragenden Abschnitt aufweist. Er korrespondiert mit einem Flansch 13, der mit der Oberkante der Ausströmhaube 7 stoffschlüssig verbunden ist und diese vollständig umgibt. Querwandung 12 und Flansch 13 sind gleichfalls miteinander abdichtend verschraubt.

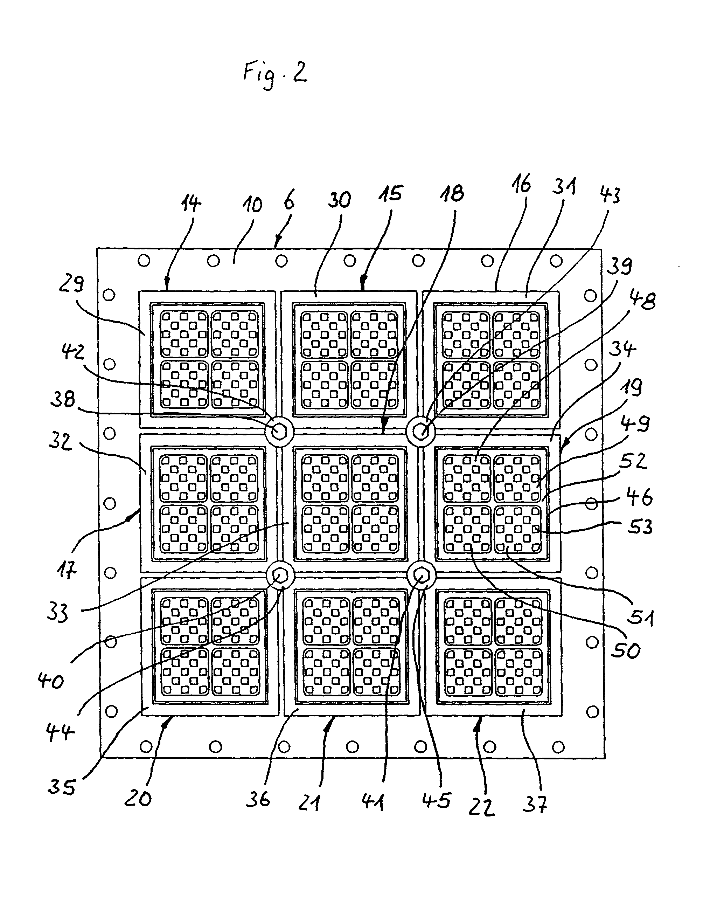

Die Querwandungen 10, 12 und damit auch das Mittelteil 6 wird von Filterkassetten 14-22 durchsetzt, deren Anzahl und Anordnung sich aus Fig. 2 ersehen läßt. Es ist zu sehen, daß insgesamt neun Filterkassetten 14-22 vorhanden sind, die so angeordnet sind, daß jeweils drei Filterkassetten 14, 15, 16 bzw. 17, 18, 19 bzw. 20, 21, 22 nebeneinander und drei Filterkassetten 14, 17, 20 bzw. 15, 18, 21 bzw. 16, 19, 22 untereinander angeordnet sind, so daß insgesamt ein quadratisches Feld von einander zugeordneten Filterkassetten 14-22 entsteht. In Fig. 1 ist nur die mittlere Reihe von Filterkassetten 17, 18, 19 zu sehen. Die Filterkassetten 14-22 sitzen jeweils in an deren Außenumfang angepaßten Öffnungen 23-28 in den Querwandungen 10, 12.

Anströmseitig weisen die Filterkassetten 14-22 Flansche 29-37 auf, die an der Anströmseite der Ausströmhaube 7 über Dichtungen anliegen und somit die Filterkassetten 14-22 am Durchrutschen hindern. An den Punkten, an denen die Ecken von jeweils vier Flanschen 29-37 zusammenstoßen, sind Schrauben 38, 39, 40, 41 vorgesehen, über die Unterlegscheiben 42, 43, 44, 45 gegen die Anströmseiten der Flansche 29-37 gepreßt und somit die Flansche 29-37 gegen die Querwandung 10 fixiert und axial festgelegt werden. Zusätzlich überdeckt der nach innen ragende Abschnitt des Flansches 9 des Einströmstutzens 3 die außenliegenden Teile der Flansche 29-32 und 34-37.

In der abströmseitigen Querwandung 12 sind die Filterkassetten 14-22 lediglich innerhalb der Öffnungen 26, 27, 28 geführt, jedoch nicht anderweitig fixiert. Zum Austauschen der Filterkassetten 14-22 ist es somit lediglich erforderlich, die Einströmhaube 5 abzunehmen und die Schrauben 38, 39, 40, 41 mit den Unterlegscheiben 42, 43, 44, 45 abzunehmen. Die Filterkassetten 14-22 können dann nach oben herausgezogen und durch neue ersetzt werden.

Da die Filterkassetten 14-22 untereinander identisch sind, genügt es für die Beschreibung des Aufbaus der Filterkassetten 14-22, sich auf die Filterkassette 19 zu beschränken. Die Filterkassette 19 hat ein im Querschnitt quadratisches, rohrförmiges Kassettengehäuse 46, an dessen Außenseite der Flansch 34 befestigt bzw. angeschweißt ist. Das Kassettengehäuse 46 besteht aus temperaturbeständigem Stahl oder Edelstahl. Untenseitig weist das Kassettengehäuse 46 einen nach innen ragenden Haltesteg 47 auf.

In dem Kassettengehäuse 46 sind insgesamt vier Filterelemente 48, 49, 50, 51 in quadratischer Anordnung, d. h. jeweils zwei nebeneinander eingesetzt. Sie erstrecken sich über nahezu die gesamte Länge des Kassettengehäuses 46 und sind identisch ausgebildet. Sie bestehen aus gesintertem SiC-Material, sind also eigenstabil. Die Filterelemente 48, 49, 50, 51 sind untereinander und gegenüber dem Kassettengehäuse 46 durch eine Isolationsschicht 53 getrennt, das aus einem unter Einwirkung von Hitze expandierenden Keramikmaterial besteht, wie es beispielsweise unter der Marke "Interam" der Firma 3M bekannt ist. Die Isolationsschicht 52 fixiert die Filterelemente 48, 49, 50, 51 bei Hitzeeinwirkung aufgrund des Bläheffektes fest innerhalb des Kassettengehäuses 46, jedoch unabhängig voneinander und von dem Kassettengehäuse 46.

Da die Filterelemente 48, 49, 50, 51 untereinander identisch sind - im übrigen auch mit allen weiteren Filterelementen in den Filterkassetten 14-22 -, sei der Aufbau der Filterelemente 48, 49, 50, 51 anhand des Filterelements 51 erläutert. Grundsätzlich ist das Filterelement 51 wie in der US-A-4 897 096 und den Figuren 5 und 6 der EP-A-0 336 883 aufgebaut mit dem Unterschied, daß das Filterelement 49 nicht kreisrunden, sondern quadratischen Außenquerschnitt hat. Das Filterelement 51 wird durchsetzt von jeweils ebenfalls quadratischen Kanälen, die durch poröse filterwirksame Längswandungen getrennt sind. In Fig. 2 sind nur die Eintrittsöffnungen der Einströmkanäle - beispielhaft mit 53 bezeichnet - zu sehen. Am abströmseitigen Ende des Filterelements 49 sind die Einströmkanäle 53 gasdicht geschlossen. Die an der Abströmseite des Filterelements 49 offenen Ausströmkanäle sind in der Ansicht gemäß Fig. 2 gasdicht geschlossen und verlaufen zwischen den Einströmkanälen 53. Auf diese Weise wird das in die Einströmkanäle 53 eingeströmte Gas gezwungen, die Längswandungen zwischen den Einströmkanälen 53 und den Ausströmkanälen zu durchströmen, wobei die im Gas enthaltenen Partikel, beispielsweise Ruß, abgeschieden werden, so daß in die Ausströmkanäle gereinigtes Gas gelangt, das die Filtereinrichtung 1 über die Ausströmhaube 7 und den Ausströmstutzen 4 verlassen kann. Als Material für die Filterelemente 48, 49, 50 kommt beispielsweise das in der EP-A-0 796 830 verwendete Material in Frage.

## Patentansprüche

1. Filtereinrichtung (1) mit einem Filtergehäuse (2), in dem nebeneinander eine Vielzahl von eigenstabilen Filterelementen (48-51) aus keramischem Material, insbesondere aus SiC, angeordnet sind, wobei die Filterelemente (48-51) poröse, filterwirksame Längswandungen für die Durchströmung des zu filternden Mediums aufweisen, die Filterelemente (48-51) rechteckigen Außenquerschnitt haben und eine Mehrzahl von Filterelementen (48-51) zu einer im Querschnitt rechteckigen Filterelementgruppe zusammengefaßt sind, **dadurch gekennzeichnet, daß** jede Filterelementgruppe innerhalb eines Kassettengehäuses (46) unter Bildung jeweils einer Filterkassette (14-22) angeordnet ist und die Filterkassetten (14-22) im Filtergehäuse (2) austauschbar gehaltert sind.

2. Filtereinrichtung nach Anspruch 1, **dadurch gekennzeichnet, daß** die Filterkassetten (14-22) so angeordnet sind, daß jeweils an zwei Seiten einer Filterkassette benachbarte Filterkassetten (14-22) vorhanden sind.

3. Filtereinrichtung nach Anspruch 1 oder 2, **dadurch gekennzeichnet, daß** die Filterelemente (48-51) nebeneinander und sich abwechselnd Einströmkanäle (53) und Ausströmkanäle aufweisen, die durch die porösen, filterwirksamen Längswandungen getrennt sind, wobei die Einströmkanäle (53) anströmseitig offen und abströmseitig geschlossen und die Ausströmkanäle anströmseitig geschlossen und abströmseitig offen sind.

4. Filtereinrichtung nach Anspruch 3, **dadurch gekennzeichnet, daß** die Einström- und Ausströmkanäle (53) rechteckigen Querschnitt haben.

5. Filtereinrichtung nach einem der Ansprüche 1 bis 4, **dadurch gekennzeichnet, daß** die Außenwandungen der Filterelemente (48-51) partikeldicht, insbesondere gasdicht ausgebildet sind.

6. Filtereinrichtung nach einem der Ansprüche 1 bis 5, **dadurch gekennzeichnet, daß** die Filterelemente (48-51) quadratischen Querschnitt haben.

7. Filtereinrichtung nach einem der Ansprüche 1 bis 6, **dadurch gekennzeichnet, daß** eine Filterelementgruppe aus jeweils vier Filterelementen (48-51) zusammengesetzt ist.

8. Filtereinrichtung nach einem der Ansprüche 1 bis 7, **dadurch gekennzeichnet, daß** die Filterelemente (48-51) einer Filterelementgruppe so angeordnet sind, daß jeweils an wenigstens zwei Seiten eines Filterelements (48-51) benachbarte Filterelemente (48-51) vorhanden sind.

9. Filtereinrichtung nach einem der Ansprüche 1 bis 7, **dadurch gekennzeichnet, daß** die Filterkassetten (14-22) hängend angeordnet und nur an einer Querwandung (10) gehaltert sind.

10. Filtereinrichtung nach einem der Ansprüche 1 bis 8, **dadurch gekennzeichnet, daß** die Filterkassetten (14-22) in wenigstens zwei beabstandeten Querwandungen (10, 12) gehaltert sind, jedoch nur an einer Querwandung (10) axial fixiert sind.

11. Filtereinrichtung nach Anspruch 10, **dadurch gekennzeichnet, daß** die abströmseitige Querwandung (12) passende Aufnahmeausnehmungen (26, 27, 28) für die Filterkassetten (14-22) aufweist.

12. Filtereinrichtung nach einem der Ansprüche 9 bis 11, **dadurch gekennzeichnet, daß** die Filterkassetten (14-22) anströmseitig einen Flansch (29-37) aufweisen, der auf der Anströmseite der einen Querwandung (10) anliegt.

13. Filtereinrichtung nach einem der Ansprüche 1 bis 11, **dadurch gekennzeichnet, daß** die Kassettengehäuse (46) die Filterelementgruppen über die gesamte Länge umgeben.

14. Filtereinrichtung nach einem der Ansprüche 1 bis 12, **dadurch gekennzeichnet, daß** zwischen den Filterelementen (48-51) untereinander und zwischen den Filterelementen (48-51) und dem Kassettengehäuse (46) Isolierschichten (52) angeordnet sind.

15. Filtereinrichtung nach Anspruch 14, **dadurch gekennzeichnet, daß** die Isolierschichten (52) aus bei Einwirkung von Hitze expandierendem Material bestehen.

16. Filtereinrichtung nach einem der Ansprüche 1 bis 15, **dadurch gekennzeichnet, daß** das Filtergehäuse (2) isolierte Durchführungen für elektrische Zuleitungen aufweist.

17. Filtereinrichtung nach Anspruch 16, **dadurch gekennzeichnet, daß** die isolierten Durchführungen eine gasdichte und thermische Isolation bilden.

## Claims

1. A filter system (1) having a filter-system housing (2) receiving a plurality of intrinsically stable filter elements (48-51) made of a ceramic, in particular SiC, the filter elements (48-51) comprising porous, filtering longitudinal walls crossed by the medium being filtered, the filter elements (48-51) having a cross-sectionally rectangular contour and a plurality of filter elements (48-51) being combined into a cross-sectionally rectangular sub-assembly of filter elements, **characterized in that** each sub-assembly of filter elements being received in a cassette case (46) while forming in each instance one filter cassette (14-22), and **in that** the filter cassettes (14-22) are held in exchangeable manner inside the filter-system housing (2).

2. Filter system as claimed in claim 1, **characterized in that** the filter cassettes (14-22) are configured in such manner that each time the two sides of one filter cassette are adjoined by adjacent filter cassettes (14-22).

3. Filter system as claimed in either of claims 1 and 2, **characterized in that** the filter elements (48-51) comprise in adjacent and alternating manner inflow ducts (53) and evacuation ducts which are separated by the porous, filtering longitudinal walls, the inflow ducts (53) being open at the intake side and being closed at the exhaust side, and the evacuation ducts being closed at the intake side and open at the exhaust side.

4. Filter system as claimed in claim 3, **characterized in that** the inflow and evacuation ducts (53) are cross-sectionally rectangular.

5. Filter system as claimed in one of claims 1 through 4, **characterized in that** the outer walls of the filter elements (48-51) are particle-impermeable and in particular are hermetic.

6. Filter system as claimed in one of claims 1 through 5, **characterized in that** the filter elements (48-51) are cross-sectionally square.

7. Filter system as claimed in one of claims 1 through 6, **characterized in that** a sub-assembly of filter elements is composed each time of four filter elements (48-51).

8. Filter system as claimed in one of claims 1 through 8, **characterized in that** the filter elements (48-51) of one sub-assembly of filter elements is configured in such manner that adjacent filter elements (48-51) are present at least at two sides of a filter element (48-51).

9. Filter system as claimed in one of claims 1 through 7, **characterized in that** the filter cassettes (14-22) are mounted in suspended manner and are supported at only one cross-wall (10).

10. Filter system as claimed in one of claims 1 through 8, **characterized in that** the filter cassettes (14-22) are supported in at least two mutually spaced cross-walls (10, 12) but are affixed axially only to one cross-wall (10).

11. Filter system as claimed in claim 10, **characterized in that** the exhaust-side cross-wall (12) is fitted with clearances (26, 27, 28) matching and seating the filter cassettes (14-22).

12. Filter system as claimed in one of claims 9 through 11, **characterized in that** at the inflow side the filter cassettes (14-22) are fitted with a flange (29-37) resting against the intake side of the cross-wall (10).

13. Filter system as claimed in one of claims 1 through 11, **characterized in that** the cassette cases (46) enclose the filter-element sub-assemblies over their entire length.

14. Filter system as claimed in one of claims 1 through 12, **characterized in that** insulating layers (52) are inserted between the filter elements (48-51) per se and between the filter elements (48-51) and the cassette case (46).

15. Filter system as claimed in claim 14, **characterized in that** the insulating layers (52) consist of a thermally expanding material.

16. Filter system as claimed in one of claims 1 through 15, **characterized in that** the filter-system housing (2) comprises insulated feedthroughs for electrical conductors.

17. Filter system as claimed in claim 16, **characterized in that** the insulated feedthroughs constitute hermetic sealing and thermal insulation.

## Revendications

1. Dispositif de filtration (1) comprenant un carter de filtration (2) dans lequel plusieurs éléments filtrants à stabilité propre (48-51) en céramique, notamment en SiC, sont disposés côte à côte, sachant que les éléments filtrants (48-51) présentent des parois longitudinales filtrantes poreuses à travers lesquelles passe le fluide à filtrer, que les éléments filtrants (48-51) présentent une section transversale extérieure rectangulaire et que plusieurs éléments filtrants (48-51) sont rassemblés en un groupe d'éléments filtrants de section transversale rectangulaire, **caractérisé en ce que** chaque groupe d'éléments filtrants est placé dans un carter de cassette (46) en formant chaque fois une cassette filtrante (14-22), et **en ce que** les cassettes filtrantes (14-22) sont maintenues dans le carter de filtration (2) de façon à pouvoir être remplacées.

2. Dispositif de filtration selon la revendication 1, **caractérisé en ce que** les cassettes filtrantes (14-22) sont disposées de telle sorte que des cassettes filtrantes (14-22) sont toujours adjacentes à deux côtés d'une cassette filtrante.

3. Dispositif de filtration selon la revendication 1 ou 2, **caractérisé en ce que** les éléments filtrants (48-51) présentent des canaux d'entrée (53) et des canaux de sortie qui sont disposés côte à côte et alternent les uns avec les autres et qui sont séparés par les parois longitudinales filtrantes poreuses, sachant que les canaux d'entrée (53) sont ouverts du côté amont et fermés du côté aval et que les canaux de sortie sont fermés du côté amont et ouverts du côté aval.

4. Dispositif de filtration selon la revendication 3, **caractérisé en ce que** les canaux d'entrée et de sortie (53) ont une section transversale rectangulaire.

5. Dispositif de filtration selon l'une des revendications 1 à 4, **caractérisé en ce que** les parois extérieures des éléments filtrants (48-51) sont étanches aux particules, notamment étanches aux gaz.

6. Dispositif de filtration selon l'une des revendications 1 à 5, **caractérisé en ce que** les éléments filtrants (48-51) ont une section transversale carrée.

7. Dispositif de filtration selon l'une des revendications 1 à 6, **caractérisé en ce qu'**un groupe d'éléments filtrants est chaque fois composé de quatre éléments filtrants (48-51).

8. Dispositif de filtration selon l'une des revendications 1 à 7, **caractérisé en ce que** les éléments filtrants (48-51) d'un groupe d'éléments filtrants sont disposés de telle sorte qu'il y a toujours des éléments filtrants (48-51) adjacents à au moins deux côtés d'un élément filtrant (48-51).

9. Dispositif de filtration selon l'une des revendications 1 à 7, **caractérisé en ce que** les cassettes filtrantes (14-22) sont suspendues et ne sont maintenues que par une paroi transversale (10).

10. Dispositif de filtration selon l'une des revendications 1 à 8, **caractérisé en ce que** les cassettes filtrantes (14-22) sont maintenues par au moins deux parois transversales (10, 12) espacées l'une de l'autre, mais ne sont fixées dans la direction axiale qu'à une paroi transversale (10).

11. Dispositif de filtration selon la revendication 10, **caractérisé en ce que** la paroi transversale (12) aval présente des logements (26, 27, 28) spécialement conçus pour recevoir les cassettes filtrantes (14-22).

12. Dispositif de filtration selon l'une des revendications 9 à 11, **caractérisé en ce que** les cassettes filtrantes (14-22) présentent en amont une bride (29-37) qui est appliquée contre le côté amont de l'une (10) des parois transversales.

13. Dispositif de filtration selon l'une des revendications 1 à 11, **caractérisé en ce que** les carters de cassette (46) entourent les groupes d'éléments filtrants sur toute leur longueur.

14. Dispositif de filtration selon l'une des revendications 1 à 12, **caractérisé en ce qu'**entre les éléments filtrants (48-51) entre eux et entre les éléments filtrants (48-51) et le carter de cassette (46) sont disposées des couches isolantes (52).

15. Dispositif de filtration selon la revendication 14, **caractérisé en ce que** les couches isolantes (52) sont composées d'un matériau qui se dilate sous l'effet de la chaleur.

16. Dispositif de filtration selon l'une des revendications 1 à 15, **caractérisé en ce que** le carter de filtration (2) présente des passages isolés pour des câbles électriques.

17. Dispositif de filtration selon la revendication 16, **caractérisé en ce que** les passages isolés constituent une isolation thermique et étanche aux gaz.
